# EUROPÄISCHE PATENTSCHRIFT

(11) **EP 0 910 767 B1**
(45) Veröffentlichungstag und Bekanntmachung des Hinweises auf die Patenterteilung: **16.04.2003**
(21) Anmeldenummer: 98908104.7
(22) Anmeldetag: 20.02.1998
(51) Int. Cl.: F16L 3/23

(54) **ERWEITERBARES TRASSENVERLEGESYSTEM FÜR LEITUNGEN UND ROHRE**
EXPANDABLE SYSTEM FOR LAYING OUT LINES AND PIPES
SYSTEME EXPANSIBLE DE FIXATION DU TRACE DE CONDUITS ET DE TUYAUX

(30) Priorität: 25.02.1997 DE 19707431; 14.03.1997 DE 19710758
(43) Veröffentlichungstag der Anmeldung: 28.04.1999
(73) Patentinhaber: Schnabl, Ludwig, A-3133 Traismauer (AT)
(72) Erfinder: Schnabl, Ludwig, A-3133 Traismauer (AT)
(74) Vertreter: Jaeger, Klaus, Dipl.-Chem. Dr.
(86) Internationale Anmeldenummer: EP9800982
(87) Internationale Veröffentlichungsnummer: WO98038445

(56) Entgegenhaltungen:
- DE-A- 3 228 475
- DE-U- 1 665 937
- DE-U- 8 209 422
- DE-U- 8 627 194
- GB-A- 864 802
- US-A- 2 939 664
- US-A- 4 490 886
- US-A- 4 635 886

## Beschreibung

Die Erfindung betrifft ein Trassenverlegesystem für Leitungen und Rohre mit mindestens einem Traganker mit jeweils einem Befestigungselement zum Befestigen an einer Wand oder Decke, wobei jeder Traganker einen sich entgegengesetzt zum Befestigungselement in axialer Verlängerung erstreckenden Rastschaft aufweist, auf welchem wenigstens ein Trassenbügel lösbar kraft- und/oder formschlüssig fixiert ist, und wobei der Rastschaft jeden Trassenbügel an einer mit Rastmechanismen ausgestatteten Durchführungsöffnung fixierend durchgreift.

Ein solches Trassenverlegesystem ist aus der DE 32 28 475 A1 bereits bekannt. Bei dem hier beschriebenen Trassenverlegesystem ist ein als Gewindebolzen ausgebildeter Rastschaft über eine Schweißverbindung an einem Karosserieteil eines Kraftfahrzeugs befestigt. Auf den sich in axialer Verlängerung von dieser Schweißverbindung erstreckenden Rastschaft ist ein Trassenbügel aufrastbar, der hierzu Rastelemente aufweist, die im Innern einer Durchgangsöffnung des aus Kunststoff gefertigten Trassenbügels angeordnet sind. Der Trassenbügel umfaßt weiterhin einen sich quer zum Rastschaft erstreckenden Bügelabschnitt, der im eingerasteten Zustand zu führende Rohre oder Leitungen an der Wand verklemmt. Dem hier offenbarten Trassenverlegesystem haftet jedoch der Nachteil an, daß es zur Aufnahme weiterer Kabel oder Leitungen der Trassenbügel durch Schrauben von dem Gewindebolzen gelöst werden muß. Hierbei sind bereits verlegte Kabel auf umständliche Weise zu entfernen. Ferner können nur solche Leitungen aufgenommen werden, deren Durchmesser dem Durchmesser der bereits verlegten Leitungen im wesentlichen entspricht. Auch ein Austausch sämtlicher Leitungen durch dickere Leitungen wäre nicht ohne Austausch des fest verankerten Gewindebolzens möglich, dessen Längserstreckung die Dicke der zu verlegenden Leitungen begrenzt. Darüber hinaus ist die Gesamtzahl der gehaltenen Leitungen durch die Dimensionierung des Bügelabschnittes des Trassenbügels begrenzt.

In der US 4,409,886 ist ein weiteres Trassenverlegesystem beschrieben, das über ein Befestigungselement mit einer Tragwand verbunden werden kann. Das Befestigungselement ist mit einer Ringschelle verbunden, die einen bandförmig ausgestalteten Traganker mit Rastschaft aufweist. An dem dem Rastschaft gegenüberliegenden Ende des Tragankers ist eine Rastöse vorgesehen, in die der Rastschaft einführbar ist, um über Rastelemente eine zugfeste, aber wieder lösbare Verbindung der beiden Enden des Tragankers herzustellen. Auf diese Weise wird eine zur Halterung von Rohren und Leitungen in einem Bündel vorgesehene Halteschlaufe ausgebildet. Nachteilig ist jedoch auch bei diesem vorbekannten Trassensystem, daß zur Aufnahme weiterer Leitungen und Rohre die Halteschlaufe gelöst und somit die Montage bereits befestigter Rohre und Leitungen aufgehoben werden muss.

Die DE 82 09 422.5 offenbart ein Trassenverlegesystem, das einen Trassenbügel umfaßt, der über eine Schraubverbindung mit einer Wand oder Decke verbunden wird. Dabei erstreckt sich der Trassenbügel im Wesentlichen parallel zur Wand, wobei aufgrund einer Elastizität des Haltebügels eine Klemmhalterung von Leitungen und Rohren zwischen Trassenbügel und Wand bereitgestellt wird. Auch in diesem Fall ist jedoch zur Erweiterung der Anzahl von Leitungen und Rohren der Trassenbügel von der Wand zu lösen, so daß die erneute Verlegung von bereits befestigten Leitungen die Aufnahme zusätzlicher Leitungen erschwert. Darüber hinaus ist die Aufnahmekapazität des Trassenbügels durch seine Dimensionierung begrenzt.

Aus eigener Vorbenutzung des Erfinders ist ein Klemmbügel bekannt, der die Leitungen und Rohre in einem profilierten Bügel aufnimmt. Dieser Klemmbügel wird mit Hilfe eines Befestigungselements nach Art eines Steckschaftes im Mauerwerk verankert. Klemmbügel und Steckschaft sind einteilig ausgeführt. Ist der Steckschaft vollständig in die Bohrung eingeführt, so liegen die Enden des Klemmbügels an der Wand- oder Deckenfläche an, so daß die gesammelten Leitungen oder Rohre nicht herausgleiten können. Durch ein Abbiegen entgegen der Befestigungsrichtung können jedoch auch nach Einbringen des Befestigungselementes in das Mauerwerk Leitungen der Trasse hinzugefügt bzw. entfernt werden. Mit Festlegung des Klemmbügels im Mauerwerk ergibt sich, bedingt durch den Abstand zwischen Klemmbügel und Wandoberfläche, der sich wiederum aus der Länge des Befestigungselements selbst und aus seiner Einführtiefe in der Bohrung bestimmt, eine maximale Aufnahmekapazität. Mit anderen Worten, es steht den zu führenden Leitungen bzw. Rohren nur eine begrenzte Aufnahmekapazität zur Verfügung. Sollen nun im Rahmen eventuell notwendiger Nachrüstarbeiten zusätzliche Leitungen oder Rohre aufgenommen werden, so ist dies nur in Bezug zum noch vorhandenen Freiraum möglich. Ist die Aufnahmekapazität des Klemmbügels aber bereits erschöpft, so ist eine Neuinstallation der Trasse unabdingbar. Dies ist insbesondere an schwer zugänglichen Stellen äußerst hinderlich und zudem sehr zeitund materialaufwendig. An Stellen mit begrenztem Platzbedarf, wie beispielsweise innerhalb von Vormauerungen und Durchführungen, erweist sich diese Vorgehensweise als sehr unpraktisch und ist außerdem in Abhängigkeit von der gewählten Verbindungstechnik mit einem erhöhten Arbeits- bzw. Kraftaufwand verbunden bzw. durch fehlenden Montageplatz nicht mehr realisierbar.

Ausgehend von diesem Stand der Technik liegt der vorliegenden Erfindung die Aufgabe zugrunde, ein erweiterbares Trassenverlegesystem der eingangs genannten Art zu schaffen, das in seiner Aufnahmekapazität auch nach erfolgter Montage noch erweiterbar ist, wobei eine Erhöhung dieser Aufnahmekapazität erreicht werden kann, ohne daß die ursprüngliche Verankerung des Trassenverlegesystem im Mauerwerk oder die Halterung bereits verlegter Leitungen aufgehoben werden muß.

Erfindungsgemäß wird diese Aufgabe durch ein erweiterbares Trassenverlegesystem für Leitungen und Rohre nach der Lehre des Anspruchs 1 gelöst.

Weitere Ausgestaltungen der Erfindung sind Gegenstand der Unteransprüche.

Erfindungsgemäß kann ein Trassenverlegesystem der Eingangs genannten Art durch wenige Handgriffe erweitert werden. Hierzu ist es ausreichend auf den sich in axialer Richtung über die Kontur des Trassenbügels hinaus erstreckenden Rastschaft einen weiteren Trassebügels aufzurasten. Durch das Verrasten des zusätzlichen Trassenbügels können weitere Kabel, Rohre oder Leitungen zwischen dem bereits installierten Trassenbügel und dem zusätzlich eingefügten Bügel verklemmt werden. Erfindungsgemäß werden zusätzliche Rohre oder Leitungen somit schichtweise in mehreren Etagen verlegt, so daß sich das Loslösen bereits verlegter Systeme erübrigt.

Erfindungsgemäß können die Trassenbügel auf den Rastschäften in axialer Richtung frei verschoben werden. Dies ermöglicht eine feste Halterung von Leitungen unterschiedlicher Dicke, wobei gleich dicke Leitungen in einer Schicht zusammengefaßt werden können. Erfindungsgemäß lässt sich ferner auf einfache Weise eine mechanische Trennung von Leitungen herbeiführen. Dies kann beispielsweise der Übersichtlichkeit dienen, die insbesondere bei der Halterung von Leitungen in Bündeln verloren gehen kann.

Als Befestigungselemente finden Steck-, Klebe-, Schweiß-, Schrauboder Schlagbefestigungselemente Anwendung.

Eine häufig verwendete Ausführungsform sieht einen Steckdübel als Befestigungselement vor, welcher ohne Werkzeug mit geringem Kraftaufwand in die vorgesehene Bohrung gesteckt wird, sich darin fixiert und der nahezu jedem Belastungsfall widersteht.

Das Befestigungselement ist derart gewählt, daß eine kraft- und formschlüssige Verbindung des Trassenverlegesystems mit dem Mauerwerk realisiert wird. Es lassen sich jederzeit auch alle konventionellen Befe stigungstechniken, wie beispielsweise eine Schrauben-Dübel-Verbindung oder Spreizdübel, zum Einsatz bringen.

Vorteilhafterweise weist der Traganker neben einem Rastschaft eine Rastöse auf. Sowohl bei dieser aber auch bei jeder anderen erfindungsgemäßen Weiterentwicklung können Befestigungselement und Traganker einstückig ausgebildet sein. Abweichend hierzu ist aber auch eine Verbindung durch formschlüssig ineinandergreifende Elemente möglich.

Der Rastschaft ist in Abhängigkeit von der konzipierten Trassenerweiterung in seiner Länge entsprechend dimensioniert und weist unterschiedliche Längserstreckungen, welche von der Anzahl der aufzunehmenden Trassenbügel abhängen, auf.

Der Rastschaft des Traganker weist eine Folge von sich über seine Längsausdehnung erstreckenden Rastelementen auf, auf welche die Trassenbügel aufrastbar sind. Die zum Zwecke der Fixierung vorgesehenen Rastelemente der Rastschäfte sind vorteilhafterweise komplementär und kompatibel zu Rastelementen der Durchgangsöffnung, so daß die jeweiligen Rastelemente lösbar miteinander in Eingriff gebracht werden können.

Die Traganker, bestehend aus Rastschaft und Rastöse, und ebenso die Trassenbügel können aus starrem und/oder flexiblem Material hergestellt sein.

Als flexibles oder auch als starres Material findet Kunststoff ebenso wie Metall in entsprechender Ausbildung Anwendung.

Der Rastschaft weist eine Folge von sich einseitig, beidseitig oder umfänglich axial erstreckenden Rastelementen auf und erstreckt sich bandförmig oder stabartig vom Befestigungselement weg.

Bei einer zweckmäßigen Weiterentwicklung ist zwischen Befestigungselement und Rastschaft eine solche Rastöse vorgesehen, die eine dem Umfang und der Form des Rastschaftes entsprechende Öffnung aufweist, die ebenfalls mit komplementären und/oder kompatiblen Rastelementen versehen ist.

Der Traganker ist vorzugsweise flexibel ausgebildet, so daß dieser beispielsweise bei Abrüstarbeiten, wenn lediglich eine Leitung verbleibt und damit auch der Trassenbügel rückgebaut werden kann, eine Festlegung der Leitung durch Herumführen des Rastschaftes um die Leitung und Fixierung innerhalb der Rastöse ermöglicht. Die freiwerdenden Rückbaumaterialien, insbesondere Trassenbügel, können danach anderweitig eingesetzt werden. Dies stellt eine äußerst ökonomische und materialsparende Installationsform dar.

Die sich an das Befestigungselement anschließende Rastöse kann verschiedene geometrische Formen aufweisen. Sie kann in Abhängigkeit von der gewählten Befestigungsform an Wand oder Decke, rechteckig, nach Art einer Halbkugel oder sich stabförmig erstreckend ausgebildet sein. Funktionell wesentlich ist, daß sich die Rastösenöffnung nahezu rechtwinklig zur Achse des Rastschaftes in Biegerichtung des Rastschaftes erstreckt, so daß ein Hindurchführen des Rastschaftes durch diese Rastösenöffnung ohne Verdrehen des Rastschaftes hinsichtlich seiner Längsachse gewährleistet wird, um sicherzustellen, daß die Rastelemente des Rastschaftes mit denen der Rastöse eine formschlüssige Verbindung eingehen können, also ineinander eingreifen.

Die Rastelemente der Rastöse sind kompatibel und komplementär zu den Rastelementen des Rastschaftes gewählt. Realisiert wird dies beispielsweise mit einer Art Verzahnung, wie sie ähnlich bei einem Kabelbinder Anwendung findet.

Die auf den Rastschäften in ihrer Anzahl erweiterbar anordbaren Trassenbügel können in Richtung auf die Wand oder Decke gewölbt ausgebildet sein. Diese Ausbildung verhindert vorteilhafterweise zusätzlich ein Heruntergleiten der Leitungen und Rohre vom Trassenbügel.

Ist mindestens ein Trassenbügel an lediglich einem Traganker und hier vorzugsweise mittig festgelegt, so spricht man von einer sogenannten Einpunktbefestigung.

Die Leitungen oder Rohre müßten, um aus einem Trassenverlegesystem mit Einpunktbefestigung austreten zu können, diese aus der gewölbten Ausführung resultierende Gegenkraft überwinden. Der Trassenbügel steht also unter einer Art Vorspannung.

Sind ein oder mehrere Trassenbügel an zwei oder mehreren Tragankern, die vorzugsweise voneinander beabstandet sind befestigt, so spricht man von einer sogenannten Zweipunkt- oder Mehrpunktbefestigung.

Ein Herausgleiten der Leitungen und Rohre aus einem Trassenverlegesystem mit einer Zweipunktbefestigung, bei welcher die Trassenbügel durch zwei, jeweils in den Bügelenden angeordneten Öffnungen geführt werden ist nicht möglich. Die Durchführungsöffnungen der Trassenbügel der Zweipunktbefestigungen weisen Rastmechanismen auf, die sowohl in Durchführungsrichtung, als auch entgegen dieser Durchführungsrichtung eine Fixierung auf dem Rastschaft gewährleisten.

Die Leitungen oder Rohre tragenden Oberflächen der Trassenbügel können vorteilhafterweise strukturiert oder profiliert so ausgebildet sein, daß die geführten Rohre gegen mögliches Verrutschen im Trassenverlegesystem gesichert bzw. zumindest teilweise fixiert sind.

Auf den Rastschäften lassen sich gleichzeitig mehrere Trassenbügel anordnen, wobei diese entweder erst während der eigentlichen Trasseninstallation oder -erweiterung aufgeschoben oder bereits vorab auf dem Ende des Rastschaftes, als eine Art Vorrat, angebracht und gegebenenfalls durch ein zusätzliches, abschließendes Sicherungselement dort gegen Herunterfallen gesichert werden.

Die Trassenbügel weisen vorteilhafterweise mehrere Durchführungsöffnungen zum Aufrasten auf einen entsprechenden Traganker auf. Bei kleineren Trassen hat sich als vorteilhaft erwiesen den Trassenbügel mittig, also über eine mittige Durchführungsöffnung auf dem Traganker zu fixieren. Bei breiteren Trassen ist es günstig jeweils an den Außenseiten der Trassenbügel Durchführungsöffnungen sowie entsprechend zugehörige Rastelemente vorzusehen, so daß die Trassenbügel nach Art einer Zweipunktbefestigung jeweils an den Trassenbügelenden an der Wand oder der Decke festgelegt werden. Wird zusätzlich zur Zweipunktbefestigung noch die mittige Durchführung genutzt, sorgt eine sogenannte Mehrpunktbefestigung für eine hervorragende Stabilität der Trassenführung.

Die Rastelemente der Trassenbügel sind derart gestaltet, daß durch deren einfache Bedienung die Rastverbindung mit dem Rastschaft jederzeit wieder aufgehoben werden kann und sich so die Trassenbügel vom Rastschaft ohne erheblichen Aufwand wieder entfernen lassen.

Die Rastelemente der Trassenbügel sind so ausgebildet, daß sie mit den Rastelementen der Tragelemente in Eingriff gelangen. Vorteilhaft ist die Ausbildung der Rastelemente der Trassenbügel in Form lösbarer Sperrklinken mit zu den Rastelementen des Rastschaftes formkomplementären Enden, die vollständig miteinander in Eingriff gelangen. Auf dem Rastschaft sind diese Rastelemente, komplementär zu den Rastelementen des Trassenbügels einseitig, beidseitig oder umfänglich, angeordnet. Die lösbaren Rastelemente des Trassenbügels können ebenfalls als Excenter oder verzahnte Excenter ausgebildet sein.

Vorteilhafterweise sind die Rastelemente so ausgebildet, daß der Trassenbügel in gewölbter Anordnung, als auch entgegen seiner Wölbung, nach Art einer entgegengesetzten Vorspannung auf die Rastschäfte der Traganker aufrastbar ist.

Aufgrund des beliebig wählbaren Abstandes des ersten Trassenbügels auf dem Rastschaft des Tragankers von der Wand bzw. Decke sowie der beliebig wählbaren Abstände der weiteren Trassenbügel als auch der variablen Anordnung der Bügel in Richtung ihrer Wölbung oder entgegen ihrer Wölbung können die Fixpunkte oder Festlegepunkte der Trassenbügel jeweils so gewählt werden, wie es der Durchmesser der zu führenden Leitungen bzw. Rohre erfordert. Ferner können bei Verwendung gleich mehrerer Trassenbügel die Leitungen und Rohre in Abhängigkeit von den Längen der Rastschäfte mehretagig angeordnet werden, wodurch sich Leitungen mit gleichen Durchmessern als auch unterschiedliche Leitungstypen voneinander trennen lassen.

Diese vorab genannten vielfältigen Variationsmöglichkeiten bezüglich Stabilität und Aufnahmekapazität zeichnen dieses Trassenverlegesystem aus.

Die Aufnahmekapazität des erweiterbaren Trassenverlegesystems kann stets wieder neuen Verhältnissen angepaßt werden. Dies ist einerseits durch Rückbau der ursprünglichen Anordnung, d.h. durch Lösen der Trassenbügel möglich oder geschieht andererseits durch das zusätzliche Anbringen neuer Leitungen oder Rohre über zusätzlich auf die Rastschäfte aufzurastende Trassenbügel. In dieser hohen Flexibilität liegt der entscheidende Vorteil im Vergleich zu Klemmbügeln oder Sammelhalterungen, die aus dem Stand der Technik bekannt sind.

im Folgenden wird die Erfindung anhand von 2 Ausführungsbeispielen in Verbindung mit Zeichnungen Fig.1-5 näher erläutert.

Es zeigt:
- Fig. 1: die schematische Darstellung eines Tragankers mit Befestigungselement, Rastöse und Rastschaft;
- Fig. 2: die schematische Darstellung eines Trassenbügels mit zugehörigen Rastelementen in Draufsicht, Seitenansicht und Schnittdarstellung;
- Fig. 3: die schematische Darstellung eines erweiterbaren Trassenverlegesystems mit aufgerastetem Trassenbügel und Rohrleitungen in sogenannter Einpunktbefestigung;
- Fig. 4: die schematische Darstellung eines erweiterbaren Trassenverlegesystems mit einem aufgerasteten Trassenbügel und Rohrleitungen in sogenannter Zweipunktbefestigung;
- Fig. 5: ein Trassenverlegesystem in Zweipunktbefestigung in zweietagiger Ausführung;
- Fig. 6: die schematische Darstellung eines erweiterbaren Trassenverlegesystems mit zwei aufgerasteten Trassenbügeln und Rohrleitungen in sogenannter Einpunktbefestigung, zweietagig.

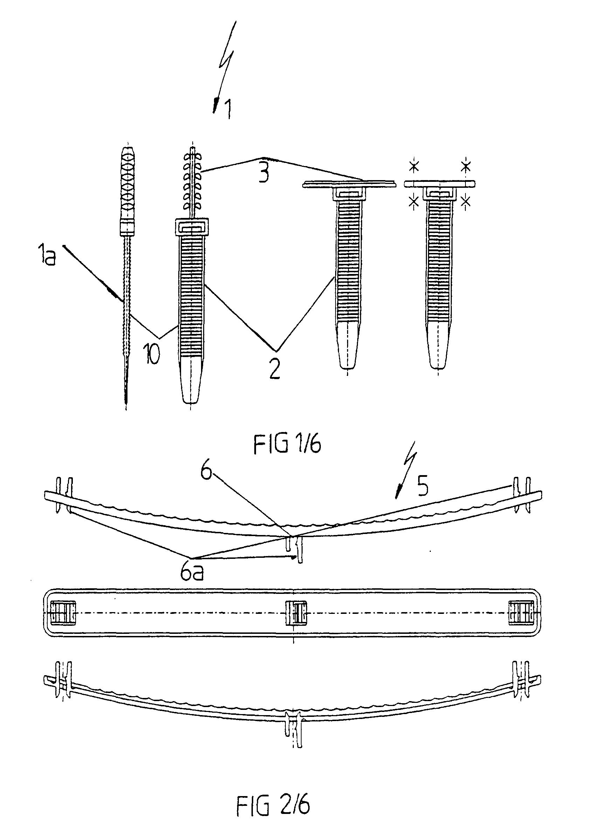

Fig. 1 zeigt einen Traganker (1) des Trassenverlegesystems, mit einem Befestigungselement (3) in Form eines Steckdübels und einem Befestigungselement (3) in Form eines Klebepad, einem Traganker mit Rastschaft (2) mit Rastverzahnung auf beiden Seiten eines bandförmig ausgebildeten Rastschaftes (2) und einer Rastöse (4) zwischen Befestigungselement (3) und Rastschaft (2). Der Steckdübel wird in eine in einer Wand bzw. Decke befindliche Bohrung gesteckt und hält dort über eine kraftschlüssige Verbindung den Traganker (1) fest. Dabei liegt die Rastöse (4) auf der Wandfläche auf, während sich der Rastschaft (2) entgegengesetzt der Richtung des Befestigungselementes (3) von der Wand bzw. Decke weg erstreckt.

In einer weiteren Ausführungsform ist das Befestigungselement (3) als Klebepad ausgebildet, welches zur Festlegung des Tragankers mit der Wand verklebt und im Bedarfsfall noch zusätzlich verschraubt wird. In dieser Form, also auch ohne aufgerasteten Montagebügel kann z.B. nach Abbauarbeiten eine verbleibende Leitung festgelegt werden, indem der Rastschaft (2) um die zu führende Leitung gelegt wird bis er in die Rastöse (4) eingeführt werden kann. Danach wird der Rastschaft (2) durch die Rastöse (4) hindurchgezogen und durch Ineinandergreifen der Rastelemente von Rastschaft (2) und Rastöse (4) fixiert, so daß die Leitung am Traganker selbst festgelegt ist und dadurch an der Wand bzw. Decke fixiert ist.

Auf dem in Fig. 1 in Seitenansicht gezeigten Traganker (1a) werden besonders die in Folge, beidseitig am Rastschaft (2) angeordneten Rastelemente in Form einer feinen, in Befestigungsrichtung gerichteten Verzahnung (10) sichtbar.

In Fig. 2 ist der Trassenbügel (5) in Draufsicht, Seitenansicht und in Schnittdarstellung gezeigt. In einer bevorzugten Ausführung befinden sich in seiner achsensymmetrischen Mitte sowie an den Trassenbügelenden, von diesen leicht beabstandet, Rastelemente (6) in Form lösbarer Sperrklinken. Eine der Sperrklinken (6) ist jeweils fest und eine beweglich innerhalb einer Rastöffnung (7) im Trassenbügel (5) angeordnet. Jeweils zwei Sperrklinken (6) wirken zusammen, wobei jeweils eine der Sperrklinken (6) noch zusätzliche hakenförmige Eingriffselemente (6a) aufweist, die mit den Rastelementen (10) des Rastschaftes (2) zusammenwirken und einen festen Halt des Trassenbügels (5) auf dem Rastschaft (2) realisieren.

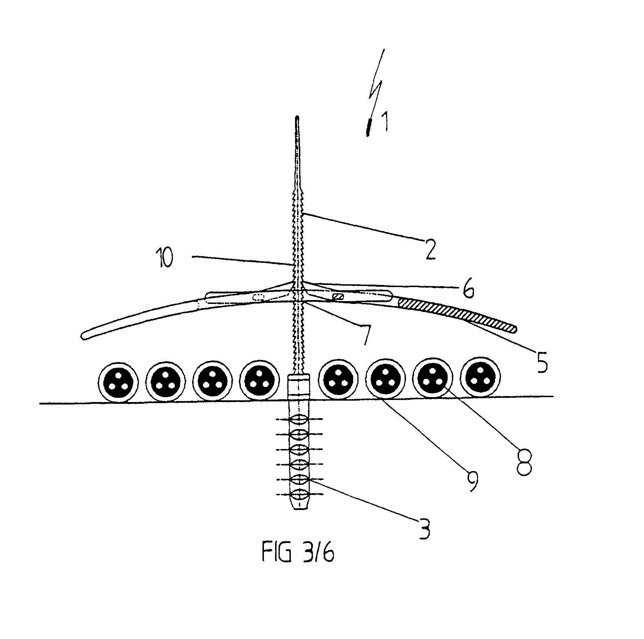

Fig. 3 zeigt in schematischer Darstellung ein erweiterbares Trassenverlegesystem mit einem Rastschaft (2), einem Befestigungselement (3) in Form eines Steckdübels, der in eine Wand (9) eingebracht ist. Durch Aufrasten eines Trassenbügels (5) auf den Rastschaft (2) werden die Leitungen (8) geführt. Der Traganker (1) mit seinem Rastschaft (2) wird an der Durchführungsöffnung (7) des Trassenbügels (5) durch denselben hindurchgeführt und durch Eingreifen der Rastelemente (6) in Form von Sperrklinken in die Rastelemente (10) in Form einer feinen Verzahnung des Rastschaftes (2) in definiertem Abstand fixiert.

Der Trassenbügel (5) wird auf den Rastschaft (2) aufgeschoben, bis die zu führenden Leitungen- und Rohre (8) bündig an der Wand bzw. Decke anliegen und dort gehalten werden. Durch die gewölbte Form des Trassenbügels (5) wird die Trasse zusätzlich zur eigentlichen Haltekraft gegen die Wand- bzw. Deckenoberfläche gedrückt. Lösbare Sperrklinken (6) heben durch Drücken des zur Achsenmitte entgegengesetzten Klinkenendes die Rastverbindung am Trassenbügel (5) auf und der Trassenbügel (5) läßt sich dann in axialer Richtung auf dem Rastschaft (2) bewegen und neu arretieren oder ganz abnehmen. Die Aufnahmekapazität des Trassenverlegesystems kann jederzeit flexibel den neuen Erfordernissen angepaßt, erweitert oder vermindert, werden.

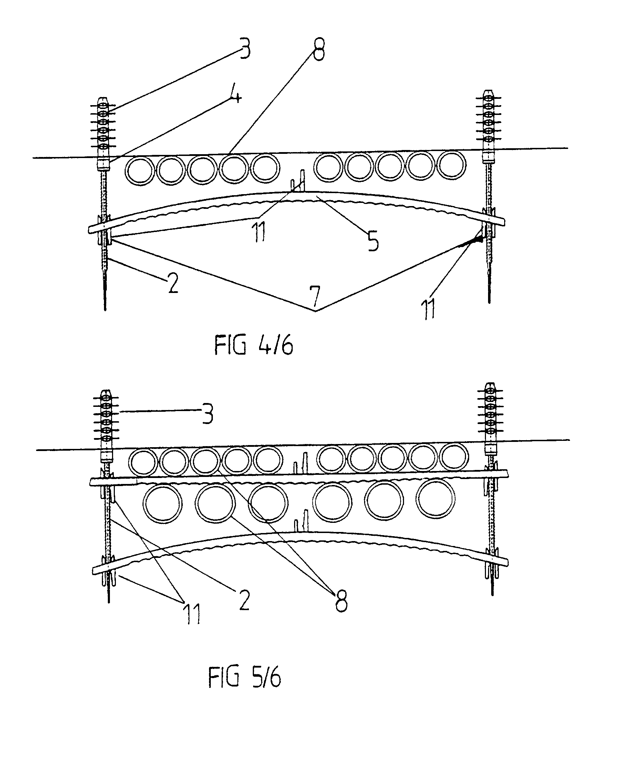

Fig. 4 zeigt eine Ausführungsform nach der sogenannten Zweipunktbefestigung, bei welcher ein Trassenbügel (5) gleichzeitg über zwei seitliche Durchführungsöffnungen (7) auf den Rastschäften (2) über Sperrklinken oder Verriegelungen (7) arretiert wurde.

Die Sperrklinken (7) sind als Klemmführungen (11) zur Zeipunktbefestigung des Trassenbügels (5) auf den Rastschäften (2) ausgebildet. Diese Klemmführungen (11) sind mittig und an den beiden Bügelenden angeordnet. Der Trassenbügel (5) ist von der Wandfläche weg gewölbt. Die Rastschäfte (2) sind bandförmig ausgebildet und weisen eine beidseitige feine Verzahnung auf. Über zwei Befestigungselemente (3) in Form von Steckdübeln, die in der Wandfläche verankert sind, wird der Trassenbügel an seinen Bügelenden unter Hindurchführen der Rastschäfte (2) durch die Klemmführungen (11), welche ebenfalls Verzahnungen aufweisen festgelegt. In dieser Ausführungsform sind insbesondere Leitungen mit gleichen Leitungsdurchmessern geführt.

Fig. 5 zeigt ein zweietagiges Trassenverlegesystem mit Zweipunktbefestigung. Analog der in Fig. 4 gezeigten einetagigen Form werden nunmehr zwei Trassenbügel (5) der Wandfläche entgegengesetzt gewölbt über Befestigungselemente (3) in Form von Steckdübeln an der Wand, unter Zwischenlage von jeweils einer Lage von Rohrleitungen (8), festgelegt. Bei Rohrleitungen gleichen Durchmessers werden die Bügel vorteilhafterweise entgegen ihrer Vorspannung fixiert. Die verwendeten Trassenbügel (5) weisen auf einer Oberfläche Profilierungen in Form von Wölbungen auf, in denen die Rohrleitungen gesichert liegen. Bei der zweietagigen Trassenverlegung wird der erste Trassenbügel vorteilhafterweise zur Platzersparnis entgegen seiner Wölbung soweit überdehnt, daß er nahezu parallel zur Wand- oder Decke verläuft.

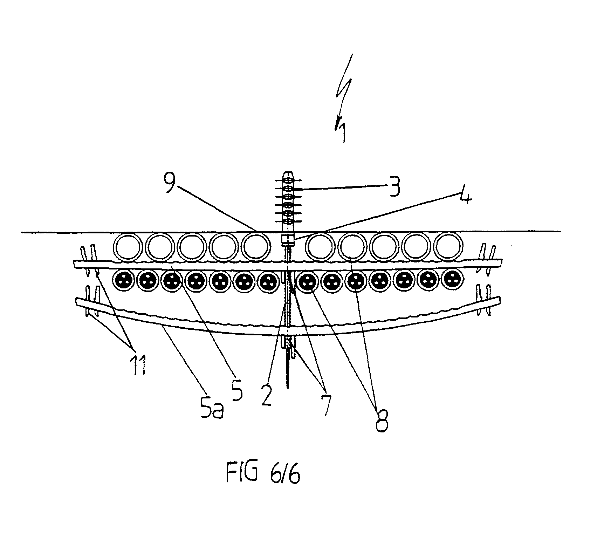

Die Fig. 6 zeigt in schematischer Darstellung ein erweiterbares Trassenverlegesystem mit einem Rastschaft 2, einem Befestigungselement 3 in Form eines Steckdübels, der in eine Wand 9 eingebracht ist. Durch Aufrasten der Trassenbügel 5 auf den Rastschaft 2 werden die Leitungen 8 geführt. Der Traganker 1 mit seinem Rastschaft 2 wird an den Durchführungsöffnungen 7 der Trassenbügel 5 durch dieselben hindurch geführt und durch Eingreifen der Rastelemente 6 in Form von Klemmführungen 11, die ebenfalls eine Verzahnung aufweisen auf der Verzahnung des Rastschaftes 2 in definiertem Abstand fixiert. Die in Fig. 6 gezeigten Trassenbügel 5 weisen jeweils sowohl eine mittige Durchführungsöffnung 7 als auch seitliche Durchführungsöffnungen, also an den Trassenbügelenden, von diesen leicht beabstandet, angeordnete Durchführungsöffnungen mit Klemmführungen 11 auf. Bei der sogenannten Einpunktbefestigung, hier, in zweietagiger Ausführung, werden vom ersten Trassenbügel 5 Rohrleitungen mit entsprechend größerem Durchmesser und zwischen dem ersten Trassenbügel 5 und dem zweiten Trassenbügel 5a Rohrleitungen mit kleineren Durchmessern geführt. Die Trassenbügel 5, 5a sind jeweils an den die Rohrleitungen tragenden Oberflächen profiliert ausgebildet, so daß die aufliegenden Rohrleitungen gegen Verrutschen fixiert sind. Die auf den Traganker 1 aufgerasteten Trassenbügel 5, 5a sind leicht gewölbt ausgebildet, so daß ein seitliches Herausrutschen der aufgenommenen Rohre zwischen den Trassenbügelenden verhindert wird, da an dem Trassenbügelende der Abstand der Trassenbügel zueinander kleiner ist als der Abstand der Trassenbügel im Bereich der mittigen Durchführungsöffnung.

## Patentansprüche

1. Trassenverlegesystem für Leitungen und Rohre mit mindestens einem Traganker mit jeweils einem Befestigungselement (3) zum Befestigen an einer Wand oder Decke wobei jeder Traganker (1) einen sich entgegengesetzt zum Befestigungselement in axialer Verlängerung erstreckenden Rastschaft (2) aufweist, auf welchem wenigstens ein Trassenbügel (5) lösbar kraft- und/oder formschlüssig fixiert ist, und wobei jeder Rastschaft (2) jeden Trassenbügel (5) an einer mit Rastmechanismen (6) ausgestatteten Durchführungsöffnung (7) fixierend durchgreift,
**dadurch gekennzeichnet,**
**daß** die Anzahl der Trassenbügel (5) auf den Rastschäften (2) erweiterbar ist, so daß ein Führen von Leitungen und Rohren in mehreren axial übereinander liegenden Schichten ermöglicht ist.

2. Trassenverlegesystem nach Anspruch 1,
**dadurch gekennzeichnet,**
**daß** die Traganker eine Rastöse (4) aufweisen.

3. Trassenverlegesystem nach einem der Ansprüche 1 und 2,
**dadurch gekennzeichnet,**
**daß** jeder Rastschaft (2) eine Folge von Rastelementen (10) aufweist, welche gegenüber den Rastelementen (6) jedes aufzurastenden Trassenbügels (5) komplementär und kompatibel ausgebildet sind.

4. Trassenverlegesystem nach einem der vorgenannten Ansprüche,
**dadurch gekennzeichnet,**
**daß** die Trassenbügel (5) Rastelemente (6) in Form von lösbaren Sperrklinken, Exzentern oder gezahnten Exzentern aufweisen, die mit den Rastelementen des Rastschaftes (2) des Tragankers in Eingriff gelangen.

5. Trassenverlegesystem nach einem der vorgenannten Ansprüche,
**dadurch gekennzeichnet,**
**daß** die Rastschäfte (2) der Traganker einseitig, beidseitig oder umfänglich mit einer Folge von Rastelementen (10) bestückt ist.

6. Trassenverlegesystem nach einem der vorgenannten Ansprüche,
**dadurch gekennzeichnet,**
**daß** die Rastöse (4) Rastelemente aufweist, welche gegenüber denjenigen des Rastschaftes (2) komplementär und kompatibel ausgebildet sind, so daß der Rastschaft (2) des Tragankers in der Rastöse (4) fixierbar und wieder lösbar ist.

7. Trassenverlegesystem nach einem der vorgenannten Ansprüche,
**dadurch gekennzeichnet,**
**daß** als Befestigungselemente (3) Steck-, Klebe-, Schweiß-, Schraub- oder Schlagbefestigungselemente Anwendung finden.

8. Trassenverlegesystem nach einem der vorgenannten Ansprüche,
**dadurch gekennzeichnet,**
**daß** die Enden der Trassenbügel (5) mit Haken oder Krallen versehen sind und die tragenden Oberflächen zwischen diesen Enden so strukturiert ausgebildet sind, daß die geführten Rohre oder Leitungen gegen Verrutschen gesichert sind.

## Claims

1. A pipeline-laying system for pipes and tubes, comprising at least one supporting frame and a similar number of fastening elements (3) for fastening to a wall or ceiling, wherein each supporting frame (1) has a locking shank (2) which extends axially in line with and in the opposite direction to the fastening element and on which at least one curved line member (5) is releasably secured positively and/or non-positively and wherein each shank (2) extends through each curved member (5) and is fixed in a passage opening (7) equipped with catch mechanisms (6), **characterised in that** the number of curved members (5) on the shanks (2) can be increased, so that pipes and tubes can be guided in a number of superposed layers.

2. A pipeline-laying system according to claim 1, **characterised in that** the supporting frame has a locking eyelet (4).

3. A pipeline-laying system according to claim 1 or 2, **characterised in that** each shank (2) has a number of catch elements (10) shaped so as to be complementary and compatible with the catch elements (6) on each curved member (5) for securing.

4. A pipeline-laying system according to any of the preceding claims, **characterised in that** the curved members (5) have catch elements (6) in the form of releasable pawls, eccentrics or toothed eccentrics which engage the catch elements on the shank (2) of the supporting frame.

5. A pipeline-laying system according to any of the preceding claims, **characterised in that** the shanks (2) of the supporting frame, on one or both sides or peripherally, are equipped with a number of catch elements (10).

6. A pipeline-laying system according to any of the preceding claims, **characterised in that** the eyelet (4) has catch elements which are shaped so as to be complementary and compatible with those on the shank (2), so that the shank (2) of the frame can be fixed in or released from the eyelet (4).

7. A pipeline-laying system according to any of the preceding claims, **characterised in that** the fastening elements (3) can be plugged, stuck, welded, screwed or hammered.

8. A pipeline-laying system according to any of the preceding claims, **characterised in that** the ends of the curved members (5) have hooks or claws, and the bearing surfaces between the ends are so structured that the guided tubes or pipes are prevented from slipping.

## Revendications

1. Système de pose de chemins de conduits et tuyaux, comportant au moins une pièce d'ancrage de support avec un élément de fixation (3) destiné à la fixation sur un mur ou un plafond, chaque pièce d'ancrage de support (1) comportant une tige d'encliquetage (2) s'étendant dans le prolongement axial à l'opposé de l'élément de fixation, sur laquelle au moins un étrier (5) de chemin est fixé de façon amovible par complémentarité de formes et/ou action de forces, et chaque tige d'encliquetage (2) fixant chaque étrier (5) de chemin en le traversant au niveau d'un orifice de passage (7) muni de mécanismes d'encliquetage (6),
**caractérisé en ce que**
le nombre d'étriers (5) de chemin peut être augmenté sur les tiges d'encliquetage (2), de sorte qu'une pose de conduits et de tubes soit possible en plusieurs couches axialement superposées.

2. Système de pose de chemin selon la revendication 1,
**caractérisé en ce que**
les pièces d'ancrage de support comportent un oeillet d'encliquetage (4).

3. Système de pose de chemin selon l'une des revendications 1 et 2,
**caractérisé en ce que**
chaque tige d'encliquetage (2) comporte une succession d'éléments d'encliquetage (10) qui sont agencés de façon à être complémentaires de, et compatibles avec, les éléments d'encliquetage (6) de chaque étrier (5) de chemin à encliqueter.

4. Système de pose de chemin selon l'une quelconque des revendications précédentes,
**caractérisé en ce que**
les étriers (5) de chemin comportent des éléments d'encliquetage (6) sous la forme de cliquets d'arrêt, d'excentriques ou d'excentriques dentés amovibles, qui sont mis en prise avec les éléments d'encliquetage de la tige d'encliquetage (2) de la pièce d'ancrage de support.

5. Système de pose de chemin selon l'une quelconque des revendications précédentes,
**caractérisé en ce que**
les tiges d'encliquetage (2) des pièces d'ancrage de support sont munies d'une succession d'éléments d'encliquetage (10) d'un seul côté, des deux côtés ou en périphérie.

6. Système de pose de chemin selon l'une quelconque des revendications précédentes,
**caractérisé en ce que**
l'oeillet d'encliquetage (4) comporte des éléments d'encliquetage, qui sont agencés de façon à être complémentaires de, et compatibles avec, ceux de la tige d'encliquetage (2), de sorte que la tige d'encliquetage (2) de la pièce d'ancrage de support puisse être fixée dans l'oeillet d'encliquetage (4), et puisse à nouveau en être dissociée.

7. Système de pose de chemin selon l'une quelconque des revendications précédentes,
**caractérisé en ce que**
des éléments de fixation à enficher, à coller, à souder, à visser ou à marteler sont utilisés en tant qu'éléments de fixation (3).

8. Système de pose de chemin selon l'une quelconque des revendications précédentes,
**caractérisé en ce que**
les extrémités des étriers (5) de chemin sont pourvues de crochets ou de crampons, et **en ce que** les surfaces portantes entre ces extrémités sont structurées de telle sorte que les tubes ou conduits posés sont assurés contre un glissement.
